# EUROPÄISCHE PATENTANMELDUNG

(11) **EP 4 299 192 A1**
(43) Veröffentlichungstag der Anmeldung: **03.01.2024**
(21) Anmeldenummer: 23182619.9
(22) Anmeldetag: 30.06.2023
(51) Int. Cl.: B05B 13/06, B05B 1/16, B05B 1/30, B05B 15/658, B05C 11/10, F16K 3/26, F16K 11/07

(54) **MEHRWEGE-FLUTVENTIL UND DIESES ENTHALTENDE ANLAGE**

(30) Priorität: 30.06.2022 DE 102022116393
(71) Anmelder: SMA Sächsische Maschinen- und Anlagenbau GmbH, 08056 Zwickau (DE)
(72) Erfinder: Jurran, Eric, 08058 Zwickau (DE); Noffke, Falk, 08141 Reinsdorf (DE)
(74) Vertreter: Schneiders & Behrendt Bochum

(57) **Zusammenfassung**

Die Erfindung betrifft ein Mehrwege-Flutventil, insbesondere zum Fluten von Hohlräumen mit Heißwachs im Automobilbau, mit einem Grundgestell (6), einem Ventilgehäuse (8) mit einem seitlichen Zugang (12), wenigstens zwei Flutabgängen (9A, 9B) und einer Rücklauföffnung (13) für das Heißwachs, einem Stellantrieb (5), der am Grundgestell (6) festgelegt ist, einer Steuereinheit zur Steuerung des Stellantriebs (5), und einer mit dem Stellantrieb (5) verbundenen Steuerwelle (4), die an der Innenwandung des Ventilgehäuses (8) geführt ist und geeignet ist, den Zugang (12), die Flutabgänge (9A, 9B) und die Rücklauföffnung (13) freizugeben oder zu verschließen, wobei die Steuerwelle (4) Ausnehmungen aufweist, die den Zugang (12), die Flutabgänge (9A, 9B) und die Rücklauföffnung (13) freigeben, dergestalt, dass die Flutabgänge (9A, 9B) einzeln oder gemeinsam freigegeben werden können, bei gemeinsam freigegebenen Flutabgängen (9A, 9B) der Zugang (12) verschlossen ist und bei gemeinsam freigegebenen Flutabgängen (9A, 9B) und geschlossenem Zugang die Rücklauföffnung (13) freigegeben ist.

## Beschreibung

Die Erfindung betrifft ein Mehrwege-Flutventil insbesondere zum Fluten von Hohlräumen mit Heißwachs im Automobilbau, mit
- einem Grundgestell,
- einem Ventilgehäuse mit einem seitlichen Zugang, wenigstens zwei Flutabgängen und einer Rücklauföffnung für das Heißwachs,
- einem Stellantrieb, der am Grundgestell festgelegt ist,
- einer Steuerungseinheit zur Steuerung des Stellantriebs, und
- einer mit dem Stellantrieb verbundenen Steuerwelle, die an der Innenwandung des Ventilgehäuses geführt ist und geeignet ist, den Zugang, die Flutabgänge und die Rücklauföffnung freizugeben oder zu verschließen,
wobei die Steuerwelle Ausnehmungen aufweist, die den Zugang, die Flutabgänge und die Rücklauföffnung freigeben, dergestalt, dass
- die Flutabgänge einzeln oder gemeinsam freigegeben werden können,
- bei gemeinsam freigegebenen Flutabgängen der Zugang verschlossen ist und
- bei gemeinsam freigegebenen Flutabgängen und geschlossenem Zugang die Rücklauföffnung freigegeben ist, sowie eine Anlage zum Fluten von Hohlräumen pro mit Heißwachs.

Es ist bekannt, konservierende Flüssigkeiten in Hohlräume einzubringen, um Korrosionserscheinungen vorzubeugen. Im Automobilbau ist die Hohlraumkonservierung mit Heißwachs allgemein üblich. In den dazu bekannten Verfahren werden die zu konservierenden Hohlräume mit Wachs bei einer Temperatur von etwa 110° C geflutet. Das Wachs erstarrt an den kalten Wandlungen und verbleibt dort als Schutzschicht; nicht verbrauchtes Wachs läuft aus dem Hohlraum ab. Bei der Hohlraumkonservierung wird nur die Wandung des Hohlraums beschichtet und geschützt. Das Heißwachs wird aus einem Wachsflutbecken über eine Ringleitung und Wachsflutventile den Hohlräumen zugeführt.

Aus der EP 1 248 026 A2 ist ein Wachsflutventil bekannt, dessen Funktionseinheiten (Flutabgang und Steuereinheit) beidseitig einer Ringleitung angeordnet sind. Diese Anordnung erlaubt nur einen Flutabgang und erschwert außerdem die Wartung.

Eine vergleichbare Vorrichtung ergibt sich aus der EP 2 740 543 A2. Auch hier sind die Funktionseinheiten beidseitig einer Ringleitung angeordnet, dabei aber in diese über entsprechende Ansatzstücke fest integriert. Dieses Wachsflutventil verfügt über zwei Flutabgänge.

Die DE 10 2019 002 547 A1 beschreibt ebenfalls ein Wachsflutventil mit zwei Flutabgängen, dessen Funktionseinheiten beidseitig einer Ringleitung angeordnet sind. Diese Anordnungen haben sich als wenig wartungsfreundlich und nicht immer hinreichend stabil erwiesen.

Insbesondere ergibt sich auch bei der Anordnung der Wachsflutventile des Standes der Technik, deren Funktionseinheiten beidseitig der Ringleitung angeordnet sind, die Notwendigkeit, auf beiden Seiten der Ringleitung Dichtsysteme vorzusehen. Dies ist zum einen aufwendig und erhöht zum anderen die Störanfälligkeit.

Aufgabe der Erfindung ist die Bereitstellung eines Wachsflutventils mit mehreren Flutabgängen, das hinsichtlich seiner Verbindung mit der Ringleitung eines Wachsflutbeckens wartungsfreundlich angeordnet ist, wenig störanfällig und gut steuerbar ist.

Diese Aufgabe wird mit einem Wachsflutventil gemäß Anspruch 1 gelöst. Eine entsprechende Anlage zum Fluten von Hohlräumen mit Heißwachs im Automobilbau mit wenigstens einem Mehrwege-Flutventil der Erfindung ist Gegenstand von Anspruch 10.

Im Folgenden bezeichnet das Wort proximal das auf das Wachsflutbecken oder die Ringleitung gerichtete Ende des jeweiligen Gegenstands, das Wort distal das auf den Stellantrieb gerichtete Ende. Das proximale Ende des Stellantriebs ist somit das auf das Wachsflutbecken gerichtete Ende und gleichzeitig die Aufnahme für das distale Ende der Steuerwelle.

Das erfindungsgemäße Mehrwege-Flutventil weist ein Grundgestell, ein Ventilgehäuse mit einem seitlichen Zugang, wenigstens zwei Flutabgängen und einer Rücklauf Öffnung für das Heißwachs, einen Stellantrieb, der am Grundgestell festgelegt ist, eine Steuereinheit zur Steuerung des Stellantriebs und eine mit dem Stellantrieb verbundene Steuerwelle auf. Es ist dazu bestimmt, an die Ringleitung eines Wachsflutbeckens angeschlossen zu werden und ist in der Regel in oder über einem Wachsflutbecken angeordnet.

Das Grundgestell dient der Fixierung des Mehrwege-Flutventils an der Außenwand eines Wachsflutbeckens und in Verbindung mit dem Ventilgehäuse und einer Arretierung an der Ringleitung der Zentrierung der Steuerwelle. Es weist im Bereich der Außenwand ein Drehlager mit axialer Arretierung für die Steuerwelle auf und dichtet die Steuerwelle zum Wachsflutbecken hin ab.

Der Stellantrieb ist elektrisch betrieben, mit einer Steuereinheit verbunden und mit seinem proximalen Ende am Grundgestell fixiert.

Die Steuerwelle ist mit ihrem distalen Ende zweckmäßigerweise über eine Wellenkupplung mit Axialund Radialausgleich mit dem Stellantrieb verbunden. Sie verläuft durch das Grundgestell und dessen Drehlager, dass neben einer axialen Arretierung auch eine Dichtung aufweist, die gegen das in dem Wachsflutbecken befindliche Heißwachs beständig ist. Das proximale Ende der Steuerwelle verläuft durch das Ventilgehäuse bis zu dessen proximalem Ende.

Die Steuerwelle wird beidseitig durch gedichtete (Kugel-)Lager geführt. Dadurch gibt es keinen Reibungsverschleiß zwischen der Steuerwelle und dem Ventilgehäuse. Die Toleranzen sind so eingestellt, dass keine O-Ringe (Verschleißteile) erforderlich sind. Das Ventil ist wartungsfrei. Die Steuerwelle kann und wird aus temperatur- unempfindlicheren Kunststoff hergestellt werden, da sie keine reibungsbedingten Drehmomente übertragen muss. Daraus resultieren geringere Fertigungskosten.

Die Steuerwelle wird nicht als Hohlwelle ausgeführt. Die Wachsführung erfolgt durch Nute und prismatische Flächen an der Außenkontur der Welle. Damit wurde der komplette Wachsfluss im Inneren des Ventils neu gestaltet. Die Fertigung vereinfacht sich stark gegenüber einer Hohlwelle. Durch die geraden parallel zu Achse verlaufenden Steuerkanten lässt sich die Wachsdosierung wesentlich präziser einstellen, als durch zwei übereinanderliegende Löcher. Die Prozesssicherheit eines gleichbleibenden Flutbildes wird erhöht.

Das Ventilgehäuse selbst ist als Rohr ausgebildet und weist an seinem proximalen Ende einen seitlichen Zugang oder Einlass auf, und an seinem distalen Ende wenigstens eine Ringdichtung, die gegen die Steuerwelle wirkt und den Austritt von Heißwachs am distalen Ende des Ventilgehäuses verhindert. Das Ventilgehäuse weist distal zum Zugang für das Heißwachs einen Flansch zur Festlegung an der Ringleitung einer Wachsflutanlage auf. Distal zum Flansch befinden sich die Flutabgänge, durch die Heißwachs in die zu konservierenden Hohlräume gefördert wird. Darüber hinaus weist das Ventilgehäuse eine Rücklauföffnung auf, durch die überschüssiges Heißwachs zurück in Wachsflutbecken laufen kann. Es versteht sich, dass das Ventilgehäuse endseitig verschlossen ist.

Im Ventilgehäuse, das als Rohr mit Zu- und Abgängen ausgebildet ist, sind distal zu den Flutabgängen vorzugsweise zwei Dichtungen angeordnet, die das Austreten von Heißwachs in das darunter liegende Wachsflutbecken verhindern.

Die Steuerwelle ist an der Innenwandung des Ventilgehäuses geführt und geeignet, die verschiedenen Funktionsöffnungen des Ventilgehäuses funktionsgerecht zu öffnen und zu schließen. Dazu weist sie Ausnehmungen auf, die so angeordnet sind, dass die einzelnen Öffnungen des Ventilgehäuses (Zugang, Flutabgänge, Rücklauföffnung) funktionsgerecht freigegeben und verschlossen werden können. Dies bedeutet, dass die Flutabgänge einzeln oder gemeinsam freigegeben, ggf. auch verschlossen werden können, bei gemeinsam freigegebenen Flutabgängen der Zugang verschlossen werden kann, und bei gemeinsam freigegebenen Flutabgängen und geschlossenem Zugang die Rücklauföffnung freigegeben ist.

Insbesondere weist das erfindungsgemäße Mehrwege-Flutventil zwei Flutabgänge auf, die zweckmäßigerweise in einem Winkel von 90° zueinander angeordnet sind. Vorzugsweise befinden sich die beiden Flutabgänge im Ventilgehäuse auf gleicher Höhe.

Die Steuerwelle kann über den Stellantrieb in beide Richtungen und umlaufend bewegt werden. Dabei ist es in einer bevorzugten Ausführungsform aber ausreichend, sie in einem Winkel von -120° bis +120° zu verdrehen. So kann bei einem Stellwinkel von 65° bis 120° Heißwachs einen ersten Abgang (A-Abgang) zugeführt werden, bei einem Stellwinkel von -65° bis -120° einem zweiten Abgang (B-Abgang). In der Grundstellung bei 0° ist der Zugang zur Ringleitung hin verschlossen, während die beiden Flutabgänge gleichzeitig geöffnet sind, sodass Restwachs aus den zu konservierenden Hohlräumen und den Leitungen durch die ebenfalls geöffnete Rücklauföffnung abfließen kann.

Insbesondere kann der elektrische Stellantrieb die Steuerwelle stufenlos nach links oder rechts verdrehen und so den gewünschten Flutabgang wie auch die Dosierung/Menge des zuzuführenden Heißwachses steuern. Die Steuerung erfolgt über eine entsprechende Programmierung der Steuereinheit und erlaubt es, Hohlräume mit der jeweils benötigten Wachsmenge zu beaufschlagen. Das Ventilgehäuse bzw. Rohr ist als Doppelventil ausgeführt, bei dem die verschiedenen Flutabgänge nur einzeln angesteuert werden können. Nur bei verschlossenem Zugang für das Heißwachs in das Ventilgehäuse sind automatisch die Flutabgänge gemeinsam für den Rücklauf frei.

Das erfindungsgemäße Mehrwege-Flutventil ist für eine herkömmliche Anlage zum Fluten von Hohlräumen mit Heißwachs im Automobilbau geeignet und bestimmt. Eine erfindungsgemäße Anlage weist ein Wachsflutbecken und eine Ringleitung für Heißwachs auf sowie wenigstens ein erfindungsgemäßes Wachsflutventil. Das Wachs wird in der Ringleitung mit einer Mantelheizung auf der erforderlichen Temperatur gehalten. Die Mantelheizung kann beispielsweise mit Wasser von 125° C unter Druck beheizt werden, das für die Konservierung vorgesehene Wachs sollte eine Temperatur von 110 bis 115° C haben. Es versteht sich, dass alle Komponenten des erfindungsgemäßen Wachsflutventils diesen Temperaturen standhalten müssen.

Die Ringleitung einer solchen Anlage kann insbesondere auch mehrere Wachsflutventile aufweisen, die auf ihre speziellen Einsatzzweck ausgerichtet sind. Die erfindungsgemäßen Wachsflutventile weisen jeweils einen entsprechenden Flansch auf, mit dem sie an der Ringleitung arretiert werden können. Die Wachsflutventile entnehmen das Heißwachs grundsätzlich der Ringleitung, geben aber überschüssiges Wachs durch die Rücklauföffnung in das Wachsflutbecken ab. An die Flutabgänge angeschlossene Wachsleitungen sind zweckmäßigerweise beheizt.

Das erfindungsgemäßen Mehrwege-Flutventil hat mit zwei Bohrungen und zwei Anschlüssen eine einfache Bauform und benötigt nur eine einseitige Abdichtung in Richtung Wachsflutbecken sowie zwischen Ventilgehäuse und Steuerwelle. Ein zentrales und abgedichtetes Lager für die radialen und axialen Kräfte ist am Grundgestell vorhanden, eine Kupplung mit axial- und Radialausgleich am Stellantrieb. Eine zusätzliche Arretierung für das Ventilgehäuse bzw. Ventilgehäuse an der Ringleitung einer Wachsflutanlage bringt eine zusätzliche Stabilisierung für die Steuerwelle. Eine Vereinfachung bringt insbesondere der Wachseintritt innerhalb der Ringleitung - das Ventilgehäuse endet distal innerhalb der Ringleitung - wodurch sich eine zweite Abdichtung der Steuerwelle, wie im Stand der Technik, erübrigt.

Das erfindungsgemäße Flutventil wird nur einseitig im Rohr der Ringleitung montiert. Daraus ergeben sich mehrere Vorteile:
- Am Rohr muss nur ein Flansch gefertigt, geschweißt und montiert werden
- Eine parallele, fluchtende Ausrichtung der Flansche entfällt. Eine statische Überbestimmung und Verspannung bei der Montage der Ventile kann ausgeschlossen werden.
- Die Montage vereinfacht sich.
- Die Ausführung des Ventils vereinfacht sich.
- Es gib nur noch eine potenzielle Fehlerstelle statt zwei Dichtstellen (Fehlerstellen) -> im Verlauf des Betriebes werden Undichtigkeiten minimiert.
- Der resultierende Querschnitt in der Ringleitung wird nicht so stark eingeschränkt und die Strömung wird weniger behindert da nur ein Teil des Ventils in die Leitung hineinragt und nicht komplett quer hindurch geht.

Die Erfindung wird für ein Wachsflutventil mit zwei Flutabgängen durch die nachfolgenden Abbildungen näher erläutert. Es zeigen
Fig. 1 den schematischen Aufbau einer erfindungsgemäßen Wachsflutanlage;
Fig. 2 ein erfindungsgemäßes Mehrwege-Flutventil;
Fig. 3 das Ventilgehäuse mit geöffneten ersten Flutabgang A;
Fig. 4 das Ventilgehäuse mit geöffneten zweiten Flutabgang B; und
Fig. 5 das Ventilgehäuse mit geschlossenem Einlauf und geöffnetem Rücklauf.

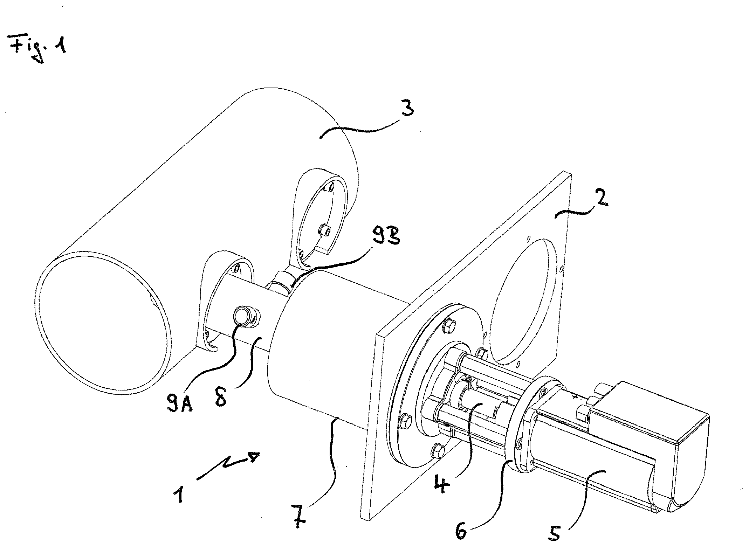

Fig. 1 zeigt ein erfindungsgemäßes Mehrwege-Flutventil 1 in seiner Anordnung an der Außenwand eines Wachsflutbeckens 2 mit dem Anschluss an eine Ringleitung 3. Das nur mit einem Teil seiner Wandung gezeigte Wachsflutbecken 2 enthält einen großen Vorrat an Heißwachs, das für die Beaufschlagung von Hohlräumen in einer extra beheizten (nicht dargestellt) Ringleitung 3 zirkuliert. Das Mehrwege-Flutventil 1 ist an der Außenwand des Wachsflutbeckens angeflanscht und ragt mit seiner Steuerwelle 4 in das Wachsflutbecken 2 hinein. Der Stellantrieb 5 des Mehrwege-Flut Ventils 1 ist an einem Grundgestell 6 festgelegt, das seinerseits an der Außenwand des Wachsflutbeckens fixiert ist.

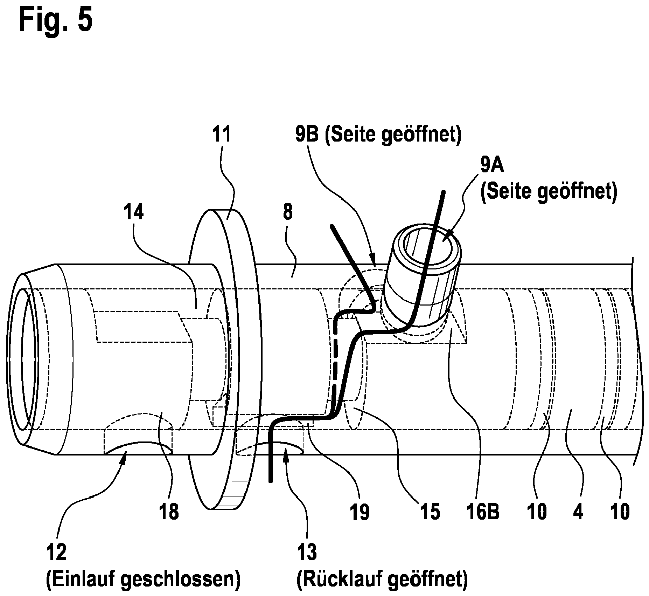

Die Steuerwelle 4 tritt innerhalb des Wachsflutbeckens 2 in das Ventilgehäuse 8 ein (siehe Fig. 5). Das Ventilgehäuse 8 weist zwei Flutabgänge 9A und 9B auf, bevor es in die Ringleitung 3 eintritt. Die Ziffer 7 bezeichnet ein Schutzrohr, das die Steuerwelle 4 an der Eintrittsstelle in das Wachsflutbecken 2 umgeben kann.

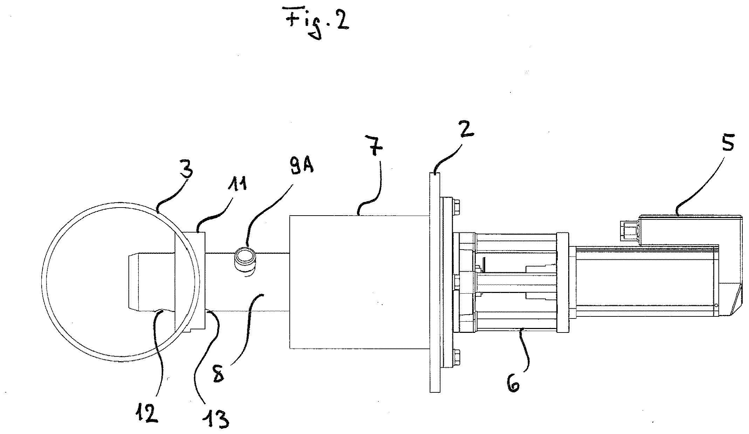

Fig. 2 zeigt ein erfindungsgemäßes Mehrwege-Flutventil 1 mit dem Stellantrieb 5, dem Grundgestell 6, das an der Außenwand des Wachsflutbeckens 2 angeflanscht ist, und dem innerhalb des Wachsflutbeckens 2 an dessen Innenwandung angeordneten Schutzrohr 7. Der Stellantrieb 5 ist einem Grundgestell 6 festgelegt, wobei ein gewisser Abstand zwischen der Außenwand des Wachsflutbeckens 2 besteht, der der Steuerwelle das notwendige Spiel zwischen der Kupplung am Stellantrieb 5 und dem Drehlager am Grundgestell 6 gibt. Die Steuerwelle 5 verläuft in dem Ventilgehäuse 8 und ist distal durch zwei Ringdichtungen gegen das Ventilgehäuse 8 abgedichtet. Das Ventilgehäuse 8 tritt durch den Flansch 11 in die Ringleitung 3 ein, aus der es durch eine Zugangsöffnung 12 mit Heißwachs versorgt werden kann. Eine Rücklauföffnung 13 erlaubt das Abfließen von Heißwachs aus den Abgängen 9A und 9B bei geschlossenem Zugang 12.

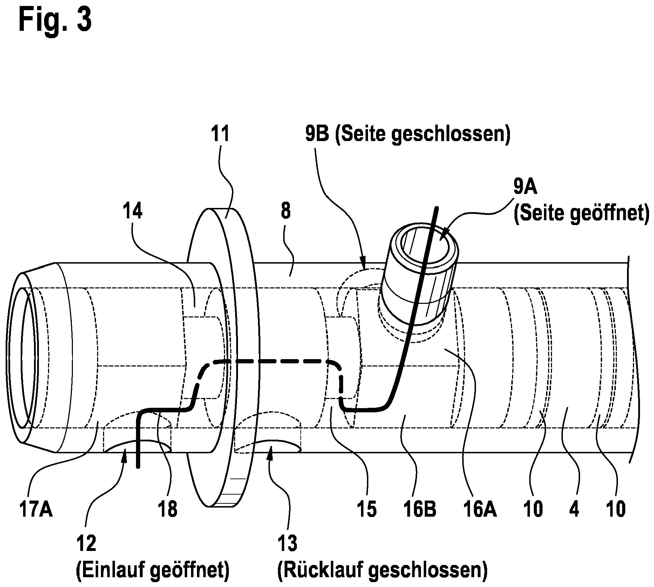

Fig. 3 zeigt das Ventilgehäuse 8 mit geöffnetem Flutabgang 9A. Die Steuerwelle 4 hat den Zugang 12 freigegeben, sodass das Heißwachs von der Einlauföffnung 12 in distaler Richtung entlang der Steuerwelle 4 zum ebenfalls freigegebenen Flutventil 9A strömen kann. Von dort gelangt es dann über eine Leitung zum jeweils zu beaufschlagen Hohlraum beispielsweise einer Autokarosserie. Die Rücklauföffnung 13 wie auch der Flutabgang 9B sind in dieser Stellung geschlossen. Fig. 3 zeigt die Stellung der Steuerwelle 4 bei voll geöffnetem Flutventil 9A um 120° gegenüber der 0° Position verdreht. Die Flutabgänge 9A und 9B sind um 90° gegeneinander versetzt.

Die Darstellung zeigt im Bereich der Steuerwelle 4 zwei Ringskanäle 14 und 15, die der Verteilung des Heißwachses dienen. Aussparungen 16 A und 16 B erlauben den Zufluss in die Flutabgänge 9A und 9B; im dargestellten Fall ist der Flutabgang 9A geöffnet und 9B geschlossen. Eine Aussparung 17 A der Steuerwelle 4 im Bereich der Einlauföffnung 12 erlaubt den Wachseintritt in die Öffnung 12 und in den Ringskanal 14. Eine in der Darstellung verdeckte Aussparung der Steuerwelle zwischen den Ringskanälen 14 und 15 erlaubt den Durchtritt des Heißwachses in den Ringskanal 15 und von dort über die Aussparungen 16 B und 16 A den Eintritt in den Flutabgang 9A. Das Wachs aus der Ringsleitung folgt der weißen Linie 18 in den Flutabgang 9A.

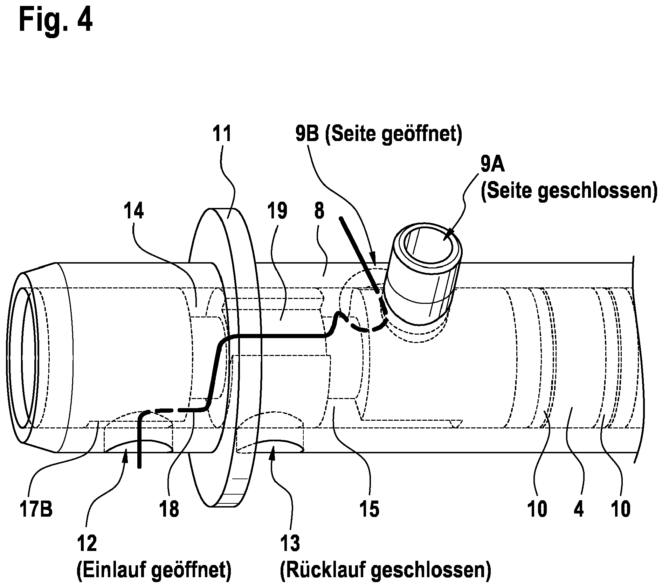

Fig. 4 zeigt das Ventilgehäuse 8 mit geöffnetem Flutabgang 9B. Hier ist entsprechend die Einlauföffnung 12 geöffnet, die Rücklauföffnung 13 verschlossen, ebenso der Flutabgang A.

Die Abbildung zeigt die Steuerwelle bei voll geöffnetem Flutabgang 9B um -120° gegenüber der 0° Position verdreht. Die Steuerwelle 4 verschließt den Flutabgang 9A, die Einlauföffnung 12 ist in dieser Position durch die Aussparung 17 B der Steuerwelle 4 freigegeben. Dargestellt ist die Aussparung 19 der Steuerwelle 4, die die Ringskanäle 14 und 15 verbindet. Der Fließweg des Wachses ist als weiße Linie 18 dargestellt.

Es versteht sich, dass die Steuerwelle 4 passgenau im Ventilgehäuse 8 verläuft. Wachs kann lediglich im Bereich der Aussparungen 16,17 und 19 sowie in den Ringskanälen 14 und 15 fließen. Zusätzliche Dichtungen 10 verhindern Leckagen am distalen Ende des Ventilgehäuses 8.

Die Abbildung zeigt die Steuerwelle 4 in ihrer Grundposition (0°-Position). Diese Position erlaubt das Abfließen von nicht benötigtem Wachs aus den Fahrzeughohlräumen und Leitungen.

Für die Freigabe der Flutabgänge 9A und 9B sind jeweils Positionen der Steuerwelle von +120° und - 120° gegenüber der 0° Position angegeben und dargestellt. Es versteht sich, dass die in einen Fahrzeughohlraum zu übertragene Wachsmenge dadurch gesteuert werden kann, dass die Flutabgänge 9A und 9B nicht vollständig geöffnet werden. Dies kann dadurch geschehen, dass die Steuerwelle die +120°- oder-120°-Position unter- oder überschreitet.

Fig. 5 zeigt das Ventilgehäuse 9 mit geschlossener Einlauföffnung 12, geöffnete Rücklauföffnung 13 und geöffneten Flutabgängen 9A und 9B. Dies ermöglicht den Abfluss von überflüssigem Heißwachs aus den gefluteten Hohlräumen und den Leitungen der Flutabgänge 9A und 9B. Die Flutabgänge 9A und 9B sind entsprechend geöffnet.

## Patentansprüche

1. Mehrwege-Flutventil, insbesondere zum Fluten von Hohlräumen mit Heißwachs im Automobilbau, mit
- einem Grundgestell (6),
- einem Ventilgehäuse (8) mit einem seitlichen Zugang (12), wenigstens zwei Flutabgängen (9A, 9B) und einer Rücklauföffnung (13) für das Heißwachs,
- einem Stellantrieb (5), der am Grundgestell (6) festgelegt ist,
- einer Steuereinheit zur Steuerung des Stellantriebs (5), und
- einer mit dem Stellantrieb (5) verbundenen Steuerwelle (4), die an der Innenwandung des Ventilgehäuses (8) geführt ist und geeignet ist, den Zugang (12), die Flutabgänge (9A, 9B) und die Rücklauföffnung (13) freizugeben oder zu verschließen,
wobei die Steuerwelle (4) Ausnehmungen (16, 17, 19) aufweist, die den Zugang (12), die Flutabgänge (9A, 9B) und die Rücklauföffnung (13) freigeben, dergestalt, dass
- die Flutabgänge (9A, 9B) einzeln oder gemeinsam freigegeben werden können,
- bei gemeinsam freigegebenen Flutabgängen (9A, 9B) der Zugang (12) verschlossen ist und
- bei gemeinsam freigegebenen Flutabgängen (9A, 9B) und geschlossenem Zugang (12) die Rücklauföffnung (13) freigegeben ist.

2. Mehrwege-Flutventil nach Anspruch 1, **dadurch gekennzeichnet, dass** der Stellantrieb (5) über eine Wellenkupplung mit Axial- und Radialausgleich mit der Steuerwelle (4) verbunden ist.

3. Mehrwege-Flutventil nach Anspruch 1 oder 2, **dadurch gekennzeichnet, dass** das Grundgestell (6) als Drehlager für die Steuerwelle (4) ausgebildet ist, die dichtend durch das Grundgestell (6) geführt ist.

4. Mehrwege-Flutventil nach einem der vorstehenden Ansprüche, **dadurch gekennzeichnet, dass** die Steuerwelle (4) zwischen den Flutabgängen (9A, 9B) und dem Grundgestell (6) wenigstens eine Dichtung (10) aufweist, die gegen das Ventilgehäuse (8) wirkt.

5. Mehrwege-Flutventil nach Anspruch 4, **dadurch gekennzeichnet, dass** die Steuerwelle (4) zwei gegen das Ventilgehäuse (8) wirkende Dichtringe (10) aufweist.

6. Mehrwege-Flutventil nach einem der vorstehenden Ansprüche, **gekennzeichnet durch** zwei Flutabgänge (9A, 9B).

7. Mehrwege-Flutventil nach Anspruch 6, **dadurch gekennzeichnet, dass** die Flutabgänge (9A, 9B) in einem Winkel von 90° zueinander in gleicher Höhe am Ventilgehäuse (8) angeordnet sind.

8. Mehrwege-Flutventil nach einem der vorstehenden Ansprüche, **dadurch gekennzeichnet, dass** in Ventilgehäuse (8) zwischen dem Zugang (12) und den Flutabgängen (9A, 9B) eine Rücklauföffnung (13) vorgesehen ist.

9. Mehrwege-Flutventil nach einem der vorstehenden Ansprüche, **dadurch gekennzeichnet, dass** das Ventilgehäuse (8) endseitig verschlossen ist.

10. Anlage zum Fluten von Hohlräumen mit Heißwachs im Automobilbau mit einem Wachsflutbecken und einer Ringleitung (3) für Heißwachs, **gekennzeichnet durch** wenigstens ein Mehrwege-Flutventil (1) nach einem der Ansprüche 1 bis 9.

11. Anlage nach Anspruch 10, **dadurch gekennzeichnet, dass** das Mehrwege-Flutventil (1) mit dem Grundgestell (6) an der Wandung (2) des Wachsflutbeckens festgelegt ist.

12. Anlage nach Anspruch 11, **dadurch gekennzeichnet, dass** das Ventilgehäuse (8) des Mehrwege-Flutventils (1) mit seinem Zugang (12) in die Ringleitung (3) geführt ist und an der Ringleitung (3) arretiert ist.

13. Anlage nach einem der Ansprüche 10 bis 12, **dadurch gekennzeichnet, dass** die Rücklauföffnung (13) des Mehrwege-Flutventils (1) in das Wachsflutbecken führt.
